(19) **Europäisches Patentamt European Patent Office Office européen des brevets**

(11) **EP 1 756 006 B1**

(12) **EUROPEAN PATENT SPECIFICATION**

(45) Date of publication and mention
of the grant of the patent:
**23.08.2017 Bulletin 2017/34**

(21) Application number: **05753089.1**

(22) Date of filing: **01.06.2005**

(51) Int Cl.:
***C01G 23/04*** (2006.01)

(86) International application number:
**PCT/GB2005/002172**

(87) International publication number:
**WO 2005/118480 (15.12.2005 Gazette 2005/50)**

(54) **REDUCED MOISTURE CHEMICAL REACTIONS**

CHEMISCHE REAKTIONEN BEI VERRINGERTER FEUCHTE

REACTIONS CHIMIQUES A HUMIDITE REDUITE

(84) Designated Contracting States:
**AT BE BG CH CY CZ DE DK EE ES FI FR GB GR HU IE IS IT LI LT LU MC NL PL PT RO SE SI SK TR**

(30) Priority: **01.06.2004 GB 0412211**

(43) Date of publication of application:
**28.02.2007 Bulletin 2007/09**

(73) Proprietor: **ATRAVERDA LIMITED
Roseheyworth Business Park
Abertillery
NP13 1SX (GB)**

(72) Inventors:
• **HILL, Andrew
Nottingham NG9 3DZ (GB)**
• **HILL, John
Sheffield S10 5RQ (GB)**

(74) Representative: **Boult Wade Tennant
Verulam Gardens
70 Gray's Inn Road
London WC1X 8BT (GB)**

(56) References cited:
**EP-A- 0 478 152     WO-A-96/36563**
**US-A- 5 314 171     US-A- 6 104 015**
**US-A1- 2002 066 338**

• **PATENT ABSTRACTS OF JAPAN vol. 018, no. 400 (C-1230), 26 July 1994 (1994-07-26) -& JP 06 115938 A (SUMITOMO SITIX CORP), 26 April 1994 (1994-04-26)**
• **BULLARD, D.E. ET AL: "Processing of refractory ores in a microweve induced "cold" plasma" CHEMICAL ABSTRACTS + INDEXES, AMERICAN CHEMICAL SOCIETY. COLUMBUS, US, vol. 119, no. 16, 18 October 1993 (1993-10-18), page 194, XP001089104 ISSN: 0009-2258**

Remarks:
The file contains technical information submitted after the application was filed and not included in this specification

**Description**

This invention relates to the production of compounds via reactions which are adversely affected by high water concentrations.

One important commercial chemical reaction is the conversion of titanium dioxide into titanium suboxide materials ($Ti_nO_{2n-1}$), according to the following reversible reaction:

$$nTiO_2 + H_2 \rightleftharpoons Ti_nO_{(2n-1)} + H_2O \qquad (1)$$

In the discussion below, the conversion of titanium dioxide to the suboxide is referred to as the forward reaction, and as proceeding to the right.

Titanium suboxide materials are important commercially because some are electrically conductive and/or highly corrosion resistant. The suboxide materials have found considerable utility in electrochemical systems, such as sensors, electrochemical synthesis, water treatment, fuel cells and batteries.

In quantities of up to, say, 100 kg, titanium suboxide materials are usually manufactured in a batch furnace where an aliquot of titanium dioxide powder is heated to a temperature in excess of 1000°C under a reducing atmosphere (hydrogen being indicated above in (1)).

EP 0478152 discloses one such batch process for the production of titanium suboxides in which titanium dioxide is placed on a graphite sheet in a furnace and hydrogen gas is passed into the furnace whilst heating to 1200°C.

US 2848303 discloses the reduction of titanium dioxide by mixing it with carbon and heating in the presence of hydrogen.

JP H06-115938 relates to a method for producing a low-order titanium oxide, which is used in black pigments and the like.

As will be appreciated, for each value of n, the equilibrium constant is a function of hydrogen and water partial pressure. Therefore, by increasing the hydrogen partial pressure and/or reducing the water partial pressure the reaction will be driven to the right.

Also, the reaction (1) is endothermic and thus requires a continuous source of heat for the forward reaction to proceed.

The thermodynamics of the system indicates that only two solid phases will be present at any single set of equilibrium conditions and that high temperature will favour the forward reaction when 'n' is small (overcoming entropy considerations).

In the conventional batch furnace, the aliquot of titanium dioxide is static and consequently different parts of the aliquot are exposed to different conditions, (temperature, hydrogen and water partial pressures). This differential exposure means that the product is normally a mixture of titanium suboxides. For example, the material on the outside of the aliquot (where mass and energy transfer is relatively unhindered) will be reduced more than that located in the centre of the aliquot (where hydrogen transport to and water transfer from is relatively hindered).

Typically the material on the surface of a static aliquot may contain $Ti_3O_5$ or $Ti_4O_7$ and the material at the centre of the aliquot may consist of $Ti_8O_{15}$, $Ti_9O_{17}$ or $Ti_{10}O_{19}$, or even higher.

The electrical and chemical properties of each suboxide (*i.e.* different values of n) vary significantly. It is usually desirable to maximize the production of a particular required suboxide, whilst minimizing production of the others. For example, $Ti_4O_7$ and $Ti_5O_9$ have the highest electrical conductivity and, therefore, these have particular utility in batteries. $Ti_3O_5$ and $Ti_2O_3$ have a low conductivity and are significantly attacked chemically by many of the electrolytes used in batteries (e.g. $H_2SO_4$), forming titanate ions, which is detrimental to both the mechanical structure of the battery and the chemical operation. Accordingly, for battery applications it is desirable to maximize $Ti_4O_7$ and $Ti_5O_9$ production whilst minimizing $Ti_3O_5$ and $Ti_2O_3$ production.

It is generally not possible to physically segregate the different suboxides once manufactured and thus it is highly desirable to improve the manufacturing process to improve the heat and mass transport so that the production of the desired suboxide(s) is (are) as high as possible.

Chemical engineers have sought to improve heat and mass transport in other processes by designing continuous systems where a solid phase is moved with respect to the gas and/or agitated to ensure the uniformity of experienced conditions throughout the solid phase.

Common equipment includes tubular rotating kilns, fluidized beds, falling dense beds, and free-falling particle systems and like systems. These systems may be directly heated by a burner, the hot combustion gases from which flow inside the reaction chamber to maintain the reaction temperature. Other, indirect, heating systems are also known where heat, generated by a burner or by electrical heating, flows by conduction through the walls of the reaction chamber to maintain the reaction temperature.

It is not generally feasible to design an indirectly fired furnace with an operating temperature greater than about 1200°C because this exceeds the maximum operating temperature of most metals used in construction.

Furnaces that operate above 1200°C are generally restricted to the directly fired type. This is a highly efficient technique to transfer heat. However, combustion gases from convenient fuels (such as hydrocarbons or hydrogen) contain moisture and those using hydrocarbon fuels also contain carbon oxides.

In systems where hydrogen is used (as a reductant at high temperatures), it is preferable not to have carbon dioxide present due to the following reaction:

$$CO + H_2O = CO_2 + H_2 \qquad (2)$$

This means that direct feed burners are inappropriate or difficult to use in high temperature applications where hydrogen is used as $CO_2$ limits the amount of hydrogen available. Also, it is noted that water is generated when hydrocarbons or hydrogen is burnt and when $CO_2$ and $H_2$ reacts.

Accordingly, it is an object of the invention to overcome or at least reduce one or more of the problems associated with the prior art when carrying out reactions at high temperature and/or carrying out reactions where one or more reactants (or products) are sensitive to moisture.

It is a more particular, but not exclusive, object of the invention to provide a reaction furnace which can operate at temperatures above 1200°C.

It is a further object to provide apparatus which can produce reduced species continuously.

It is a further particular, but not exclusive, object of the invention to provide a method of, and furnace for, the production of suboxides, e.g. titanium suboxides.

It is a further non-exclusive object of the invention to provide methods of producing substances via reactions which are sensitive to water concentrations more efficiently and in a more controlled fashion.

In the first aspect of the present invention, there is provided the method defined by claim 1.

There is provided a method of continuously producing a pre-determined suboxide, the method comprising continuously feeding an oxide starting material into a reaction chamber and contacting the so-fed oxide with a substantially moisture-free gas and collecting the pre-determined suboxide.

There is provided a method of continuously producing reduced compounds, the method comprising continuously feeding an oxidised compound into a reaction chamber and contacting the so-fed compound with a substantially moisture-free reductant gas heated to a temperature in excess of 1200°C and continuously collecting the reduced compound. Preferably, the oxidized compound is titanium dioxide and the reduced compound is a titanium suboxide.

The gas may comprise one or more of hydrogen, carbon monoxide, methane, propane or other hydrocarbons.

The gas will preferably be heated by a plasma torch or by microwave energy.

There is provided a method of forming titanium suboxides, the method comprising continuously feeding titanium dioxide into a reaction chamber, the chamber comprising a moisture-free reducing atmosphere heated to above 1200°C.

Preferably, the reducing atmosphere is provided by a reductant gas. The heat may be supplied to the gas using a plasma torch or microwave energy.

There is provided apparatus for the reaction of a solid compound or compounds at temperatures in excess of 1200°C, the apparatus comprising a reaction chamber to hold a solid reactant compound through which the solid reactant compound moves and heating means to supply a source of heat which is substantially water-free and is arranged to heat the reaction chamber to a temperature in excess of 1200°C.

There is provided apparatus for the reduction of a solid reactant at temperatures in excess of 1200°C, the apparatus comprising a reaction chamber to hold the solid reactant and through which the solid reactant moves and heating means to supply a source of heat which is substantially water-free and is arranged to heat the reaction chamber to a temperature in excess of 1200°C.

The reaction chamber may be one of a rotating tube kiln, a vertical static tube kiln, a fluidized bed or other suitable type as known to the skilled addressee.

The apparatus comprises means to continuously feed the reactant to the reaction chamber. The apparatus also comprises means to continuously collect the product from the reaction chamber.

The heating means is preferably one of a plasma torch or a microwave source.

The apparatus may further comprise a reactant source arranged to allow a reactant to be transported (e.g. flow) into the reaction chamber.

Preferably, the heating means is arranged to heat the reactant before it enters the reaction chamber.

In a preferred embodiment the reactant is a gas, most preferably a gas to provide a reducing atmosphere within the reaction chamber, for example hydrogen and/or carbon monoxide, in any case gases which comprise metals will not be used.

A reactant compound may be placed within the reaction chamber prior to reaction occurring. The reactant compound is preferably titanium dioxide.

The apparatus may further comprise means to add other species to the reaction chamber which react with any water present to reduce the concentration thereof,

e.g. carbon monoxide. Hydrocarbons, such as. methane, ethane, propane, butane, ethane, propene, butene etc.may also be added.

In order that the invention may be more fully understood, it will now be described, by way of example only, and with reference to the accompanying drawings, in which:

Figure 1    shows a schematic representation of a rotary kiln apparatus;

Figure 2    shows a schematic representation of a fluidized bed reactor; and

Figure 3    shows a schematic representation of a free fall drop tube furnace.

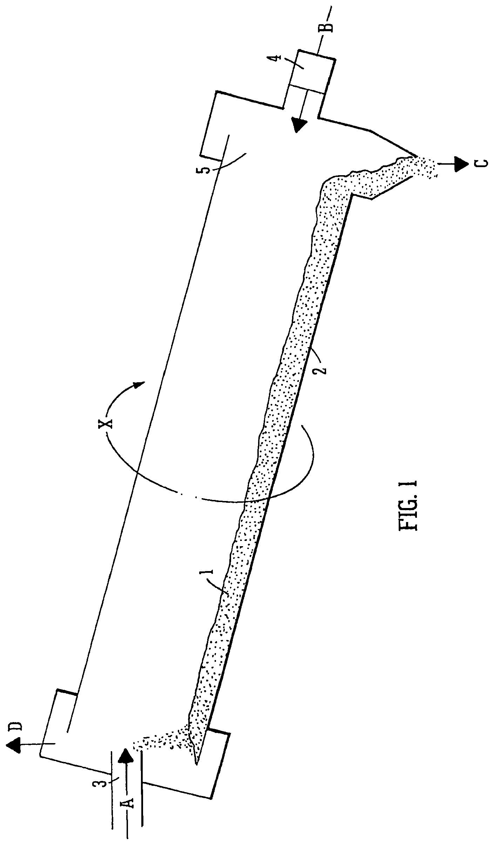

Referring to Figure 1, there is shown apparatus for the continuous reduction of reactants 1 comprising a rotary kiln 2 arranged to be rotated about its major axis in the direction of arrow X. Solid material, for example, titanium dioxide, is continuously fed into the kiln 2 at a first end 3, as indicated by arrow A. A plasma torch 4 is arranged to heat a continuous stream of hydrogen gas, indicated by arrow B, which is introduced to the kiln 2 at the opposite end 5 of the kiln 2.

The kiln 2 comprises a steel shell lined with a refractory liner of alumina blocks (not shown). The kiln 2 is also provided with alumina 'lifters' (not shown) which encourage the flow of solid material from the first end 3 to the second end 5 of the kiln 2. The thickness of the refractory liner will be chosen so that the steel shell experiences temperatures well within its mechanical and structural limits (e.g. about 200°C)

The hydrogen gas B ensures that the atmosphere within the kiln 2 is reducing. Accordingly, titanium suboxide is output from the kiln at the second end 5, as indicated by arrow C, in accordance with reaction (1) above. Excess gas containing the moisture of the reaction leaves as shown by arrow D.

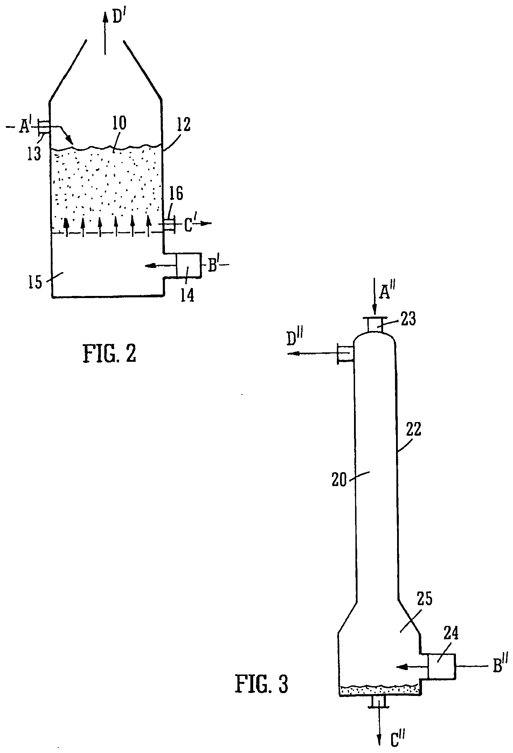

Figure 2 shows another apparatus for the continuous reduction of reactants 10 comprising fluidized bed reactor 12. Titanium dioxide is continuously fed into the reactor 12 at the top 13, as indicated by arrow A'.

The reactor 12 comprises a steel shell lined with a refractory liner of alumina blocks (not shown). Again, the thickness of the refractory liner will be chosen so that the steel shell experiences temperatures well within its mechanical and structural limits (e.g. about 200'C).

A plasma torch 14 is arranged to heat a continuous stream of hydrogen gas, indicated by arrow B', which is introduced to the reactor 12 into a plenum chamber 15 at the base of the reactor 12. The heated hydrogen B' percolates upwards through the reactor 12 fluidising the mass of reactant A' as it rises.

The hydrogen gas B' ensures that the atmosphere within the reactor 12 is reducing. Accordingly, titanium suboxide is output from the reactor 12 via an output 16, as indicated by arrow C', in accordance with reaction (1) above. Excess gas containing the moisture created in the reaction leaves as indicated by arrow D'

Figure 3 shows further apparatus for the continuous reduction of reactants 20 comprising free-fall drop-tube reactor 22. Titanium dioxide Is continuously fed Into the reactor 22 at the top 23, as indicated by arrow A" and falls under gravity toward the base of the reactor 22.

The reactor 22 comprises a steel shell lined with a refractory liner of alumina blocks (not shown). Again, the thickness of the refractory liner will be chosen so that the steel shell experiences temperatures well within its mechanical and structural limits (e.g. about 200°C).

A plasma torch 24 is arranged to heat a continuous stream of hydrogen gas, indicated by arrow B", which is introduced to the reactor 22 into a chamber 25 at the base of the reactor 22. The heated hydrogen B" flows upwards through the reactor 22 encountering the falling reactant A" as it falls.

The hydrogen gas B" ensures that the atmosphere within the reactor 22 is reducing. Accordingly, titanium suboxide Is output from the reactor 22 via an output 26, as indicated by arrow C", in accordance with reaction (1) above. Excess gas, containing the moisture of reaction leaves as shown by arrow D"

In each set of the above apparatus 1, 10, 20 carbon monoxide can be added to the hydrogen gas stream B, B', B". The CO will react with any water present via reaction (2) above. Also, carbon may be added to the feed $TiO_2$ to react with any water via the following reactions:

$$C + H_2O = CO + H_2 \qquad (3)$$

$$C + 2H_2O = CO_2 + 2H_2 \qquad (4)$$

It will be appreciated from the drawings that the reactants are fed counter currently to one another, it will be understood that this is the arrangement as it ensures that the 'most reduced' solid reactants come into contact with the 'driest' hydrogen.

It can be shown from thermodynamic calculations (see Eriksson and Pelton; Mett. Trans. B.; 24B (1993) pp 795-805) that to achieve an equilibrium composition of $Ti_5O_9$ using 5 moles of $H_2$ per mole of $TiO_2$ an operating temperature of about 1400°C would be required.

By way of a comparison, if the feed hydrogen contained 5 v/v % $H_2O$ along with the carbon oxides from a methane burner using 10 % excess air, the required equilibrium temperature is raised to 1650°C. This temperature is very close to the melting points of titanium suboxides and is likely to generate problems of agglomeration. Accordingly, it is desirable to reduce the temperature to effect satisfactory reclamation of the product, to reduce operating costs and to increase the service life of the apparatus.

It can also be shown that a reaction run to equilibrium with dry hydrogen at 1500°C will produce $Ti_4O_7$, and requires about 6.6 moles of $H_2$ per mole of $TiO_2$. Using the prior art burner mentioned above, at 1500°C, the equilibrium concentration will be a mixture of $Ti_9O_{17}$ and $Ti_{10}O_{19}$. To produce $Ti_4O_7$ using the prior art burner requires a three-fold increase in the amount of hydrogen used.

Accordingly, it has been shown that by using a substantially moisture-free source of heat, the operating temperatures can be reduced or the amount of reactants can be reduced. In either case, the invention makes the continuous fabrication of titanium suboxides more economical than has heretofore been achievable.

It will be appreciated that although the above description relates to the reduction of $TiO_2$ there are many other reactions which could benefit from this invention. Any reactant or product which is sensitive to moisture may benefit when reacted under a reducing atmosphere. More than one solid reactant may be fed into the reaction chamber. Other suboxides may be fabricated. Other reductant gases which do not comprise metals (*e.g.* magnesium, sodium and so on) may be utilised.

### Claims

1. A method of continuously producing a pre-determined suboxide, the method comprising continuously feeding an oxide starting material into a reaction chamber, counter currently feeding a substantially moisture free reductant gas into the reaction chamber and contacting the so-fed oxide with the reductant gas and continuously collecting the pre-determined suboxide.

2. A method according to claim 1, wherein the oxide is titanium dioxide and the suboxide compound is a titanium suboxide.

3. A method according to any of claims 1 or 2, wherein the gas comprises one or more of hydrogen, carbon monoxide, methane, propane or other hydrocarbons.

4. A method according to any of claims 1 to 3, comprising heating the gas by a plasma torch or by using microwave energy.

5. A method according to any preceding claim, comprising heating the reductant gas to a temperature sufficient to heat the chamber to above 1200ºC.

### Patentansprüche

1. Verfahren zur kontinuierlichen Herstellung eines vorgegebenen Suboxids, wobei das Verfahren umfasst, ein Ausgangsoxid in eine Reaktionskammer zuzuführen, ein im Wesentlichen wasserfreies gasförmiges Reduktionsmittel im Gegenstrom in die Reaktionskammer einzubringen, das auf diese Weise zugeführte Oxid mit dem gasförmigen Reduktionsmittel in Kontakt zu bringen und das vorgegebene Suboxid aufzufangen.

2. Verfahren nach Anspruch 1, wobei es sich bei dem Oxid um Titandioxid handelt und das Suboxid ein Titansuboxid ist.

3. Verfahren nach einem der Ansprüche 1 oder 2, wobei das Gas Wasserstoff, Kohlenmonoxid, Methan, Propan oder andere Kohlenwasserstoffe oder Gemische hiervon umfasst.

4. Verfahren nach einem der Ansprüche 1 bis 3, das umfasst, das Gas mit Hilfe eines Plasmabrenners oder unter Verwendung von Mikrowellenenergie zu erhitzen.

5. Verfahren nach einem der vorhergehenden Ansprüche, das umfasst, das gasförmige Reduktionsmittel auf eine Temperatur zu erwärmen, die ausreicht, um die Kammer auf eine Temperatur über 1200 °C zu erhitzen.

### Revendications

1. Procédé pour produire en continu un sous-oxyde prédéterminé, le procédé comprenant l'alimentation en continu d'un matériau de départ à base d'oxyde dans une chambre de réaction, l'alimentation à contre-courant d'un gaz réducteur sensiblement exempt d'humidité dans la chambre de réaction et la mise en contact de l'oxyde ainsi alimenté avec le gaz réducteur et la récupération continue du sous-oxyde prédéterminé.

2. Procédé selon la revendication 1, dans lequel l'oxyde est du dioxyde de titane et le composé de sous-oxyde est un sous-oxyde de titane.

3. Procédé selon l'une quelconque des revendications 1 ou 2, dans lequel le gaz comprend un ou plusieurs éléments parmi de l'hydrogène, du monoxyde de carbone, du méthane, du propane ou d'autres hydrocarbures.

4. Procédé selon l'une quelconque des revendications 1 à 3, comprenant le chauffage du gaz par une torche à plasma ou en utilisant une énergie de micro-ondes.

5. Procédé selon l'une quelconque des revendications précédentes, comprenant le chauffage du gaz réducteur à une température suffisante pour chauffer la chambre au-dessus de 1 200 °C.

FIG. 1

FIG. 2

FIG. 3

7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0478152 A
- US 2848303 A
- JP H06115938 B

**Non-patent literature cited in the description**

- **ERIKSSON ; PELTON.** *Mett. Trans. B.,* 1993, vol. 24B, 795-805